# EUROPÄISCHE PATENTANMELDUNG

(11) **EP 4 534 397 A1**
(43) Veröffentlichungstag der Anmeldung: **09.04.2025**
(21) Anmeldenummer: 24205126.6
(22) Anmeldetag: 07.10.2024
(51) Int. Cl.: B62K 7/04, B62K 13/04, B62K 19/46, B62K 13/08, B62K 15/00

(54) **MOTORROLLER UND SYSTEM ZUR BEREITSTELLUNG EINES TRANSPORTBEDARFSGERECHT ANGEPASSTEN MOTORROLLERS**

(30) Priorität: 05.10.2023 DE 202023002086 U; 04.05.2024 DE 102024112578
(71) Anmelder: Ebenbichler, Albert, 73666 Baltmannsweiler (DE)
(72) Erfinder: Ebenbichler, Albert, 73666 Baltmannsweiler (DE)
(74) Vertreter: Meyer, Thorsten

(57) **Zusammenfassung**

Es werden ein Motorroller (99) mit einer Basis (01) mit einem Lenkerbügel (10) und einem Tragrahmen (02) mit Vorder- (03) und Hinterrad (04) sowie ein einen solchen transportbedarfsgerecht angepassten Motorroller (99) bereitstellendes System beschrieben. Der Motorroller (99) umfasst mindestens eine Sitzfläche (60, 61) und mindestens zwei zur Anordnung eines Wechselaufbaus (05) an dem Tragrahmen (02) ausgebildete Befestigungspunkte (20, 21, 22, 23, 24, 25). Der Wechselaufbau (05) ist an mindestens einem der Befestigungspunkte (20, 21, 22, 23, 24, 25) angeordnet. Die Sitzfläche (60, 61) ist an dem Wechselaufbau (05) ausgebildet. Das System besteht aus einer Gruppe von unterschiedlichen, jeweils an eine individuelle Transportaufgabe angepassten oder anpassbaren Wechselaufbauten (05) mit jeweils der auf oder an dem jeweiligen Wechselaufbau (059 ausgebildeter Sitzmöglichkeit (60, 61) und der Basis (01) mit dem Lenkerbügel (10) und dem Tragrahmen (02) mit Vorder- (03) und Hinterrad (04), wobei an dem Tragrahmen (02) mindestens zwei Befestigungspunkte (20, 21, 22, 23, 24, 25) zur Anordnung eines der Wechselaufbauten (05) an mindestens einem der Befestigungspunkte (20, 21, 22, 23, 24, 25) des Tragrahmens (02) ausgebildet sind.

## Beschreibung

Die Erfindung betrifft einen Motorroller gemäß dem Oberbegriff des Anspruchs 1. Insbesondere betrifft die Erfindung ein einspuriges, motorgetriebenes Fahrzeug mit einem Tragrahmen mit tiefem Durchstieg und einem Trittbrett zwischen Vorder- und Hinterrad.

Einspurigen Fahrzeugen gemein ist ihr Aufbau mit einem Tragrahmen, an diesem angeordnet ein Vorderrad und ein Hinterrad sowie ein Gelenk, welches einen Einschlag des Vorderrads gegenüber dem Hinterrad um eine auf einer Verbindungslinie zwischen der Nabe des Vorderrads und der Nabe des Hinterrads aufstehende und innerhalb einer von einem der Räder aufgespannten Fläche verlaufende Achse erlaubt.

Einspurige, motorgetriebene Fahrzeuge sind hinlänglich bekannt. Bekannte Bauformen sind Motorräder und Motorroller mit Verbrennungs- oder Elektroantrieb.

Der Unterschied zwischen Motorrädern und Motorrollern ist der so genannte Knieschluss. Bei einem Motorrad sitzt der Fahrer mit einem Bein links und einem Bein rechts am Fahrzeug anliegend auf dem Sattel, ähnlich der Sitzposition auf einem Pferd. Statt in Steigbügeln werden die Füße beim Fahren auf Fußrasten abgestützt. Ein Motorroller weist einen freien Durchstieg auf. Im Kniebereich ist er frei von festen Fahrzeugteilen. Statt Fußrasten weist er ein Bodenblech als Trittbrett auf. Die Sitzposition auf dem Sattel eines Motorrollers entspricht daher eher der auf einem Stuhl oder Barhocker. Eine Mischform ist bei einem als Elektrofahrrad ausgebildeten Damenfahrrad verwirklicht.

Von Motorrollern ist bekannt, unter dem Sattel ein Transportfach für kleinere Gegenstände oder für einen bei Teilnahme am Straßenverkehr vorgesehenen Helm vorzusehen. Sowohl beim Motorrad, als auch beim Motorroller ist bekannt, hinter dem Sattel wahlweise einen Gepäckträger oder einen Soziussitz für einen Mitfahrer vorzusehen. Häufig gesehen sind beispielsweise im Bereich des Gepäckträgers oder Soziussitzes bei Motorrädern meist seitlich auskragend und bei Motorrollern eher nach oben aufbauend angeordnete Transportkoffer.

Bestimmte Motorräder können darüber hinaus mit einem Seitenwagen beispielsweise zur Personenbeförderung versehen werden. Hierdurch verlieren sie ihre Einspurigkeit und ihre damit einhergehenden Vorteile sowohl hinsichtlich Beweglichkeit im Straßenverkehr als auch im Parkraumbedarf.

Damit sind bereits die Grenzen einer individuellen Anpassungsmöglichkeit an unterschiedliche Transportaufgaben gesetzt.

Unter der Bezeichnung "Fat Albert" ist ein einspuriges, elektromotorgetriebenes Fahrzeug mit einem geschlossenen Tragrahmen bekannt. Oben auf dem Tragrahmen ist der Sattel für ein oder für zwei Personen angeordnet, in dessen Verlängerung nach hinten sich ein Gepäckträger anschließt. Innerhalb des vom Rahmen umgebenen Bereichs, dem so genannten Rahmendreieck, ist ein übergroßes Staufach angeordnet.

Der Begriff Rahmendreieck orientiert sich an einer Sprachkonvention und stellt keinerlei Einschränkung hinsichtlich der beispielsweise auch vier-, fünf- oder mehreckig ausgestaltbaren Geometrie des von einem Rahmen umgebenen Bereichs dar.

Sämtliche beschriebenen Fahrzeuge sind mit einer am Tragrahmen oberhalb des Hinterrads an fest vorgegebener Stelle installierten Sitzmöglichkeit versehen. Hiervon abweichend sind Elektrotretroller zur Verwendung im Stehen vorgesehen und verfügen von sich aus über keinerlei Sitzmöglichkeit. Im Zubehörmarkt finden sich Fahrradsättel, die als Stehhilfen in ein nach oben offenes Rohrstück, das entweder auf dem Trittbrett aufstehend anordenbar, oder wie bei einem Fahrrad an fest vorgegebener Stelle installierter Teil des Tragrahmens ist, einsteckbar sind. Letzteres wandelt den Tretroller in ein Laufrad. Bei der auf dem Trittbrett aufstehenden Anordnung gibt es eine klappbare Variante mit einer das Trittbrett umgreifenden Klemmvorrichtung, an der das offene Rohrstück um eine Horizontalachse nach vorn bis auf das Trittbrett hinabklappbar und nach hinten in seiner Neigung durch einen Anschlag beschränkt schwenkbar angeordnet ist. Da das hinabklappte Rohrstück das Trittbrett einnimmt, ist der Tretroller in diesem Zustand als solcher nicht mehr zu verwenden. Vielmehr handelt es sich dabei um eine platzsparende Verstaulösung für den mit Stehhilfe ausgestatteten, zum Laufrad umgestalteten Roller.

Die das Trittbrett umgreifende Klemmvorrichtung stellt aufgrund des Reibschlusses ein nicht unerhebliches Sicherheitsrisiko bei der Benutzung des mit Stehhilfe ausgestatteten Rollers dar.

Die für eine Stehhilfe notwendige Länge des Rohrstücks erzwingt darüber hinaus die Anordnung der Klemmvorrichtung ganz am Ende des Trittbretts, um die Klappbarkeit zu gewährleisten.

Aufgabe der Erfindung ist, ein einspuriges Fahrzeug bereitzustellen, welches hochflexibel an verschiedene Transportaufgaben anpassbar ist.

Die Aufgabe wird durch die Merkmale des Anspruchs 1 gelöst. Vorteilhafte Ausführungsformen sind in den Ansprüchen, den Zeichnungen sowie in der nachfolgenden Beschreibung, einschließlich der zu den Zeichnungen zugehörigen, wiedergegeben.

Erfindungsgemäß ist vorgeschlagen, dass ein Motorroller mit einer Basis mit einem Lenkerbügel und einem Tragrahmen mit Vorder- und Hinterrad, umfassend mindestens eine Sitzfläche, und mit mindestens einer/m zur lösbaren Anordnung eines Wechselaufbaus an dem Tragrahmen und/oder auf einer durch den Tragrahmen gebildeten Unterstützungsfläche und/oder hierzu ausgebildete/n Befestigungspunkt/en zur Festlegung des Wechselaufbaus, sich dadurch auszeichnet, dass der Wechselaufbau und/oder der Tragrahmen eine ein oder beidseitig des Motorrollers ausgebildete, wenigstens zum Teil unter der Sitzfläche hindurchführende Lade- oder Durchladeöffnung aufweist.

Von Vorteil ist an der Lade- oder Durchladeöffnung wenigstens ein Klappflügel angeordnet, der entweder an dem Wechselaufbau oder an dem Tragrahmen angelenkt ist, wobei der Klappflügel in aufgeklapptem Zustand eine Auflagefläche seitlich der Durchladeöffnung bildet, sodass die Unterstützungsfläche verbreiterbar ist, wobei der Klappflügel hierzu insbesondere in einer Position fixierbar ist.

Die Lade- oder Durchladeöffnung ist bevorzugterweise wenigstens an einer Seite des Motorrollers mit dem Klappflügel als Klappe im zugeklappten Zustand verschließbar.

Die wenigstens eine Klappe weist von Vorteil insbesondere eine weitere an dieser angelenkte von dieser abklappbare Auslegefläche auf, die die Unterstützungsfläche im ausgeklappten Zustand nochmals vergrößert.

Die wenigstens eine Klappe bildet nach einer Ausgestaltung der Erfindung in geöffnetem Zustand eine Rampe von der Unterstützungsfläche zum Boden unter bzw. neben dem Motorroller, vermittels welcher Gegenstände vom Boden neben dem Motorroller in den Wechselaufbau und/oder auf die Unterstützungsfläche erleichtert gebracht werden können.

Von Vorteil ist der Wechselaufbau zumindest unter Beitrag eines Formschlusses an wenigstens einem der Befestigungspunkte lösbar anordenbar.

Bevorzugterweise ist der der Schwerpunkt der Unterstützungsfläche im Wesentlichen auf Höhe der Achsen der Räder angeordnet. Dies ist vorteilhaft, da die verschiedenen Aufbauten den Schwerpunkt, insbesondere je nach Beladung, stark beeinflussen können, uns do die Fahrsicherheit gewährleistet ist.

Zur Einsparung von Teilen kann von Vorteil vorgesehen sein, dass die Sitzfläche an dem Wechselaufbauausgebildet ist.

Eine weitere sehr vorteilhafte Variante der Erfindung schlägt vor, dass an der Klappe ein im geöffneten Zustand der Klappe auf dem Boden neben dem Motorroller abrollendes, die Unterstützungsfläche wenigstens teilweise unterstützendes Seitenrad angebracht ist.

Bevorzugterweise umfasst der Tragrahmen ein zwischen Vorder- und Hinterrad angeordnetes Trittbrett umfasst.

Nach einer weiteren Ausgestaltung der Erfindung ist vorgesehen, dass der Wechselaufbau zumindest unter der Sitzfläche einen Stauraum oder ein Staufach aufweist.

Von Vorteil weist der Wechselaufbau ein die Höhe der Sitzfläche vor dieser überragenden Stauraum oder Staufach auf.

Ebenso von Vorteil weist der Wechselaufbau ein die Höhe der Sitzfläche hinter dieser überragenden Stauraum oder Staufach auf.

Es ist ersichtlich, dass durch die Erfindung eine einspurige, motorgetriebene Fahrzeugplattform bereitgestellt wird, die eine variable oder individuelle Anpassung der Anordnung der beispielsweise als Sattel oder Sitz analog zu einem Motorradsattel oder - sitz, oder als Sattel- oder Sitzbank analog zu einer Motorradsitzbank oder als Sattelkissen ausgeführten Sitzmöglichkeit an unterschiedliche Transportaufgaben ermöglicht, wie beispielsweise einen sicheren Transport von Abmessungen von nach dem Stand der Technik an einspurige motorgetriebene Fahrzeuge anordbaren Transportanbauten überschreitender, sperriger Gegenstände.

Nach einem weiteren Aspekt der Erfindung ist alternativ oder zusätzlich ein transportbedarfsgerecht anpassbares Motorroller bereitstellendes System vorgeschlagen, welches System aus verschiedenen, jeweils an eine besondere Transportaufgabe angepassten Wechselaufbauten mit jeweils der auf oder an dem jeweiligen Wechselaufbau ausgebildeter Sitzmöglichkeit, beispielsweise Sitzfläche, und der Basis mit dem Lenkerbügel und dem Tragrahmen mit Vorder- und Hinterrad besteht, wobei an dem Tragrahmen mindestens zwei Befestigungspunkte zur gegebenenfalls lösbaren Anordnung eines der Wechselaufbauten an mindestens einem der Befestigungspunkte des Tragrahmens ausgebildet sind.

Die Sitzmöglichkeit kann beispielsweise ein tragendes Untergestell, eine Polsterung und eine Satteldecke und/oder Bezug umfassen. Am Untergestell können mit kurz als Befestigungspunkte bezeichneten Befestigungsbereichen korrespondierende Befestigungs- und/oder Verbindungsmittel angeordnet sein.

Die Sitzmöglichkeit kann im Gegensatz zu herkömmlichen, einspurigen Fahrzeugen an unterschiedlichen Positionen an der Fahrzeugplattform angeordnet werden. Auch können so unterschiedliche Sitzmöglichkeiten je nach Bedarf durch Austausch beispielsweise einer Doppel-Sitzbank gegen einen Einzel-Sattel oder umgekehrt an der Fahrzeugplattform angeordnet werden.

Der durch seine Wechselaufbauten eine an verschiedenartige Transportaufgaben anpassbare Fahrzeugplattform bildende Motorroller zeichnet sich dadurch aus, dass die Sitzmöglichkeit in Abhängigkeit von der von dem einspurigen, motorgetriebenen Fahrzeug zu bewerkstelligenden Transportaufgabe individuell an einem oder mehreren der fest vorgegebenen, kurz als Befestigungspunkte bezeichneten Befestigungsbereichen installierbar ist. Bei den Befestigungsbereichen handelt es sich beispielsweise um beispielsweise mit zuvor in Verbindung mit der Sitzmöglichkeit erwähnten Befestigungs- und/oder Verbindungsmitteln korrespondierende Verbindungselemente, die eine beispielsweise form- und/oder reib- und/oder kraftschlüssige mechanische Verbindung herzustellen erlauben, wie etwa Bajonettverschlüsse und/oder Rastverschlüsse oder dergleichen. Alternativ oder zusätzlich kann es sich um beispielsweise Rahmenabschnitte handeln, an denen Rohrschellen und/oder Klemmverschlüsse und/oder beispielsweise werkzeugfrei betätigbare Schnellverschlüsse als Befestigungs- und/oder Verbindungsmittel anordbar sind. Denkbar sind auch Aufnahmen in Form von beispielsweise Bohrungen, wie etwa Durchgangs- und/oder Sacklöcher, beispielsweise in Form von Lochreihen angeordnet für entsprechende, hiermit korrespondierende Befestigungs- und/oder Verbindungsmittel. Bevorzugt ist die Sitzmöglichkeit an einer von mehreren in Abhängigkeit von der von dem einspurigen, motorgetriebenen Fahrzeug zu bewerkstelligenden Transportaufgabe individuell an einem oder mehreren der fest vorgegebenen Befestigungspunkte anordbaren Wechselaufbauten installiert. Die Höhe der Sitzmöglichkeit befindet sich dabei zumindest in der überwiegenden Zahl der Fälle bevorzugt oberhalb des Hinterrads.

Sich hierdurch ergebende Vorteile sind beispielsweise unterschiedliche Fahrzeugkonfigurationen, die alle auf der selben Plattform aufbauen.

Unterschiedlichste, an den Befestigungspunkten anordbare Wechselaufbauten können durch Erlangen von Teilegutachten im Straßenverkehr verwendet werden.

Dies erleichtert das Erlangen zur Teilnahme am Straßenverkehr notwendiger Betriebserlaubnisse.

Ein solches Fahrzeug ist besonders vorteilhaft frei von der Notwendigkeit des Erlangens jeweils neuer Betriebserlaubnisse bei der Anpassung von einer Transportaufgabe an eine andere. Hierdurch ist ein solches Fahrzeug frei von der Gefahr eines Erlöschens seiner Betriebserlaubnis an verschiedenartigste Transportaufgaben anpassbar.

Die Erfindung wird nachfolgend anhand von in der Zeichnung dargestellter Ausführungsbeispiele näher erläutert. Die Größenverhältnisse der einzelnen Elemente zueinander in den Figuren entsprechen nicht immer den realen Größenverhältnissen, da einige Formen vereinfacht und andere Formen zur besseren Veranschaulichung vergrößert im Verhältnis zu anderen Elementen dargestellt sind. Für gleiche oder gleich wirkende Elemente der Erfindung werden identische Bezugszeichen verwendet. Ferner werden der Übersicht halber nur Bezugszeichen in den einzelnen Figuren dargestellt, die für die Beschreibung der jeweiligen Figur erforderlich sind. Die dargestellten Ausführungsformen stellen lediglich Beispiele dar, wie die Erfindung ausgestaltet sein kann und stellen keine abschließende Begrenzung dar. Es zeigen in schematischer Darstellung:

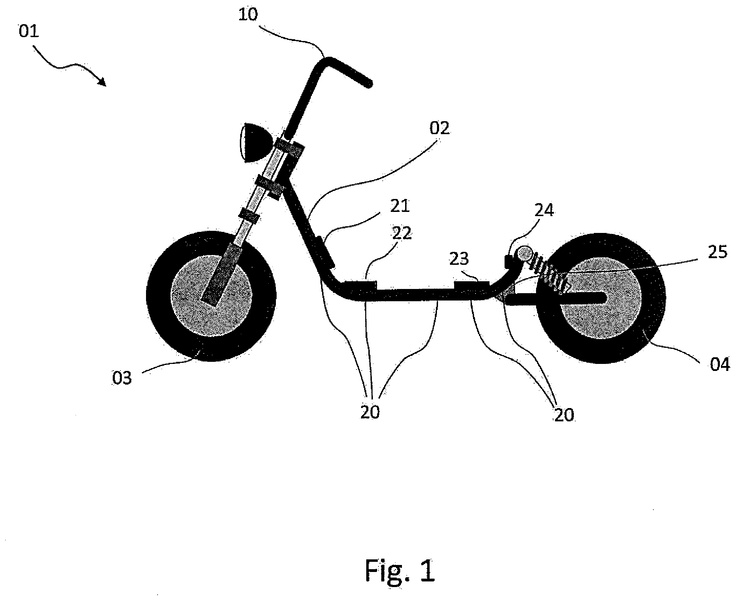

- Fig. 1: eine Basis 01 eines Motorrollers 99 in einer Seitenansicht.
- Fig. 2: in der Mitte die Basis 01 aus Fig. 1 in einer Seitenansicht und darum herum angeordnet insgesamt sieben Varianten von verschiedenen an zumindest jeweils einem der Befestigungspunkte 20, 21, 22, 23, 24, 25 der Basis 01 des Motorrollers 99 angeordneten Wechselaufbauten 05, mit an diesen ausgebildeten Sitzflächen 60, 61, jeweils in einer Seitenansicht.
- Fig. 3: bis 5 die Klappflügel zur Verbreiterung der Auflagefläche ausgeklappt undeingeklappt auf der Trittfläche.
- Fig.6: in Ansicht a) und b) der Klappflügel geschlossen und ausgeklappt mit aktiviertem Seitenrad.
- Fig. 7: Ansicht Motorroller mit Klappflügel geschlossen mit deaktiviertem Seitenrad.
- Fig. 8: Ansicht Motorroller mit Klappflügel ausgeklappt mit aktiviertem Seitenrad.
- Fig. 9: Ansicht Motorroller mit Klappflügel ausgeklappt und geschlossen in Variante am Wechselaufbau.
- Fig.: 10Ansicht Motorroller mit Klappflügel ausgeklappt und geschlossen in Variante am Wechselaufbau.
- Fig. 11: Ansicht Motorroller mit Klappflügel als Rampe.
- Fig. 12: Ansicht Motorroller mit Klappflügel als Rampe geöffnet und geschlossen als Tiertransportbox, und
- Fig. 13: Ansicht Motorroller mit Klappflügel als Rampe zur erleichterten Gepäckeinladung.

Ein in den Fig. ganz oder in Teilen dargestellter Motorroller 99 umfasst eine Basis 01 mit einem Lenkerbügel 10, einen Tragrahmen 02 und mit einspurig angeordnet einem Vorderrad 03 und einem Hinterrad 04.

Der Motorroller 99 umfasst:
- mindestens eine Sitzfläche 60, 61, und
- mindestens zwei zur bevorzugt formschlüssigen, beispielsweise lösbaren Anordnung eines Wechselaufbaus 05, 51, 52, 53, 54, 55, 56, 57 an dem Tragrahmen 02 ausgebildete, kurz als Befestigungspunkte 20, 21, 22, 23, 24, 25 bezeichnete Befestigungsbereiche.

Der Wechselaufbau 05, 51, 52, 53, 54, 55, 56, 57 ist an mindestens einem der Befestigungspunkte 20, 21, 22, 23, 24, 25 angeordnet. Die Sitzfläche 60 ist an dem Wechselaufbau 05, 51, 52, 53, 54, 55, 56, 57 ausgebildet, beispielsweise an diesem angeordnet oder in diesen integriert, beispielsweise integraler Bestandteil desselben.

Der Wechselaufbau 05 weist mit den Befestigungspunkten korrespondierende Befestigungselemente auf, welche vorteilhaft unter Beitrag von Formschluss eine feste, jedoch bedarfsweise zum Austausch eines Wechselaufbaus 05 gegen einen anderen Wechselaufbau 05 geeignete, beispielsweise lösbare Verbindung zwischen den Wechselaufbauten 05 und der Basis 01 erlauben.

Hierdurch ist sichergestellt, dass, um einen Wechselaufbau 05 an der Basis 01 anzuordnen, an der Basis 01 keinerlei Maßnahmen vorgenommen werden müssen, die eine allgemeine Betriebszulassung oder Straßenzulassung der Basis 01 erschweren oder gar gefährden würden, oder eine erneute Erlangung einer entsprechenden Zulassung erfordern würden.

Der Motorroller 99 weist einen Lenkerbügel 27, einen Tragrahmen 02, einspurig an diesem angeordnet ein Vorderrad 03 und ein Hinterrad 04, sowie eine Sitzfläche 60 auf. Der Motorroller 99 zeichnet sich durch eine Basis 01 aus, die den Lenkerbügel 10, den Tragrahmen 02, das Vorderrad 03 und das Hinterrad 04 sowie mindestens zwei vorzugsweise an dem Tragrahmen 02 angeordnete, zur bevorzugt formschlüssigen, beispielsweise lösbaren Anordnung eines Wechselaufbaus 05, 51, 52, 53, 54, 55, 56, 57 an dem Tragrahmen 02 ausgebildete Befestigungspunkte 20, 21, 22, 23, 24, 25 umfasst. Der Motorroller 99 zeichnet sich ferner dadurch aus, dass der Wechselaufbau 05 an mindestens einem der Befestigungspunkte 20, 21, 22, 23, 24, 25 angeordnet ist. Der Motorroller 99 zeichnet sich außerdem dadurch aus, dass die Sitzfläche 60 an dem Wechselaufbau 05 ausgebildet ist.

Durch Ausbildung der Sitzfläche 60 an unterschiedlichen Stellen verschiedener Wechselaufbauten kann sich die Sitzfläche je nach verwendetem Wechselaufbau beispielsweise einer Gruppe verschiedener Wechselaufbauten an einer anderen Stelle des Motorrollers 99 befinden.

Im Unterschied zu den motorisierten, einspurigen Fahrzeugen nach dem Stand der Technik ist damit die Sitzfläche nicht an fest vorgegebener Stelle installiert. Sie kann vielmehr in Abhängigkeit von einer momentan benötigten Transportlösung in ihrer Position am Motorroller variieren.

Dadurch lässt sich der Motorroller 99 an eine Vielzahl von Transportaufgaben anpassen, da bei entsprechend sperrigem Transportgut die Position der Sitzfläche 60 am Fahrzeug durch Wahl eines anderen Aufbaus verändert werden kann.

Es ist ersichtlich, dass die der Erfindung zu Grunde liegende Aufgabe gelöst wird durch einen Motorroller 99 mit Lenkerbügel 10 und mit einem Tragrahmen 02 und daran einspurig angeordnet einem Vorderrad 03 und einem Hinterrad 04 sowie einen Wechselaufbau 05 mit daran angeordneter Sitzgelegenheit mit Sitzfläche 60, umfassend mindestens zwei Befestigungspunkte 20 zur Befestigung des Wechselaufbaus 05 bevorzugt zumindest unter Beitrag eines Formschlusses an dem Tragrahmen 02, wobei an den Befestigungspunkten 20 an unterschiedliche Transportaufgaben angepasste, die Sitzgelegenheit beziehungsweise die Sitzfläche 60 tragende Wechselaufbauten 05 anordbar sind. Der Motorroller 99 kann ein Trittbrett 26 zwischen Vorder- 03 und Hinterrad 04 aufweisen. Vorteilhaft weist er zumindest bei einer überwiegenden Anzahl der verwendbaren Wechselaufbauten 05 oder zumindest bei einem Teil der Wechselaufbauten 05, wenigstens wenn kein sperriges Transportgut mitgeführt wird, einen tiefen Durchstieg auf.

Der Motorroller 01 bildet eine Fahrzeugplattform in Gestalt eines einspurigen, motorgetriebenen Fahrzeugs mit einem Lenkerbügel 10, einem Tragrahmen 02, an diesem angeordnet ein Vorderrad 03, ein Hinterrad 04, sowie ein Gelenk, welches durch Betätigung des Lenkerbügels 10 einen Einschlag des Vorderrads 03 gegenüber dem Hinterrad 04 um eine auf einer Verbindungslinie zwischen einer Nabe des Vorderrads 03 und einer Nabe des Hinterrads 04 aufstehende und innerhalb einer von einem der Räder 03, 04 aufgespannten Fläche verlaufende Achse erlaubt, umfassend:
- mindestens eine Sitzfläche 60, und
- mindestens zwei Befestigungspunkte 20,
   wobei die Sitzfläche 60 an einem an wenigstens einem der Befestigungspunkte 20 an der Fahrzeugplattform, insbesondere am Tragrahmen 02 beispielsweise lösbar angeordneten Wechselaufbau 05 ausgebildet ist.

Die Fahrzeugplattform zeichnet sich dadurch aus, dass die eine Sitzfläche 60 umfassende Sitzmöglichkeit 06 in Abhängigkeit von der von dem einspurigen, motorgetriebenen Fahrzeug zu bewerkstelligenden Transportaufgabe individuell an einem oder mehreren der fest vorgegebenen Befestigungspunkte 20 installierbar ist. Bevorzugt ist die Sitzmöglichkeit 06 mit ihrer Sitzfläche 60 an einem von mehreren in Abhängigkeit von der von dem einspurigen, motorgetriebenen Fahrzeug zu bewerkstelligenden Transportaufgabe individuell an einem oder mehreren der fest vorgegebenen Befestigungspunkte 20 anordbaren Wechselaufbauten 05 installiert. Die Höhe der Sitzfläche 60 der Sitzmöglichkeit 06 befindet sich dabei zumindest in der überwiegenden Zahl der Fälle bevorzugt oberhalb des Hinterrads 04.

Die Sitzmöglichkeit 06 kann beispielsweise als Sattel oder Sitz analog zu einem Motorradsattel oder - sitz, oder als Sattel- oder Sitzbank analog zu einer Motorradsitzbank oder als Sattelkissen ausgeführt sein.

Die Sitzmöglichkeit 06 kann beispielsweise ein tragendes Untergestell, eine Polsterung und eine Satteldecke und/oder Bezug umfassen.

Ein solches Untergestell kann von einem Wechselaufbau 05 umfasst sein, oder selbst einen Wechselaufbau 05 umfassen. Alternativ oder zusätzlich kann ein solches Untergestell selbst Befestigungs- und/oder Verbindungsmittel umfassen, die mit beispielsweise Verbindungselementen von kurz als Befestigungspunkte bezeichneten Befestigungsbereichen beispielsweise am Wechselaufbau 05 und/oder am Tragrahmen 02 korrespondieren.

Die Sitzmöglichkeit 06 kann im Gegensatz zu herkömmlichen, einspurigen Fahrzeugen an unterschiedlichen Positionen an der Fahrzeugplattform angeordnet werden. So entstehen durch Auswahl einer bestimmten von mehreren Sitzmöglichkeiten 06 an den jeweiligen Bedarf angepasste Motorroller. Auch können so unterschiedliche Sitzmöglichkeiten 06 je nach Bedarf durch Austausch beispielsweise einer Doppel-Sitzbank gegen einen Einzel-Sattel oder umgekehrt an der Fahrzeugplattform angeordnet werden.

Die Sitzmöglichkeit 06 kann zusätzlich zu der Sitzfläche 60 eine oder mehrere Lehnen oder Lehnenstummel aufweisen, um das Fahren mit dem Motorroller 99 bequemer zu gestalten.

Bevorzugt weist die Basis 01 des Motorrollers 99 vier Befestigungspunkte 20, 21, 22, 23, 24, 25 zur Anordnung verschiedener Wechselaufbauten 05 auf.

Der Wechselaufbau 05, 51, 52, 53, 54, 55, 56, 57 kann zumindest unter Beitrag eines Formschlusses an wenigstens einem der Befestigungspunkte 20, 21, 22, 23, 24, 25 beispielsweise lösbar anordbar sein. Ein Beitrag eines Formschlusses liegt beispielsweise bei korrespondierenden Führungsflächen an den Wechselaufbauten 05 und an den Befestigungspunkten 20 mit Hintergreifungen vor, die beispielsweise mit einer beispielsweise am Wechselaufbau 05 angeordneten Rastfeder an einem Auseinandergleiten entlang der Führungsflächen gesichert sind. Derart ausgebildete Rastverschlüsse mit konzentrisch ausgebildeten Führungsflächen sind beispielsweise auch bei Bajonettverschlüssen verwirklicht.

Die Befestigungspunkte 20, 21, 22, 23, 24, 25 können zumindest zum Teil stoffschlüssig mit dem Tragrahmen 02 verbunden sein. Als stoffschlüssige Verbindungsmethoden kommen insbesondere Schweißen und Kleben in Frage.

Die Befestigungspunkte 20, 21, 22, 23, 24, 25 können alternativ oder zusätzlich Ausnehmungen umfassen.

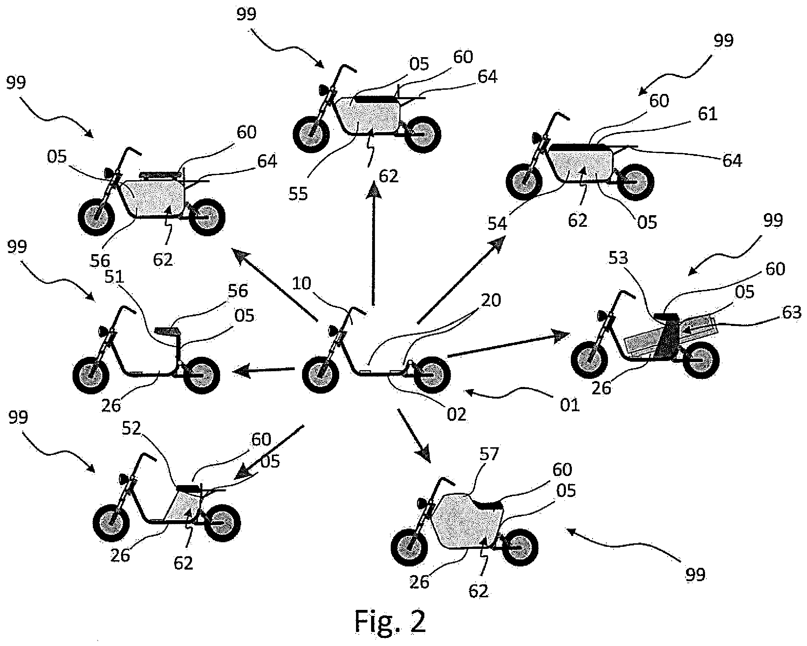

In der Darstellung Fig. 2 steht eine Rollerbasis, kurz Basis 01, in der Mitte und um die Basis 01 herum sind die Basis 01 umfassende Motorroller 99 mit unterschiedlichen Wechselaufbauten 05 dargestellt.

Wie bereits erwähnt kann der Tragrahmen 02 ein zwischen Vorder- 03 und Hinterrad 04 angeordnetes Trittbrett 26 umfassen. Das bevorzugt tief zwischen Vorder-03 und Hinterrad 04 angeordnete Trittbrett 26 kann je nach verwendetem Wechselaufbau einen tiefen Durchstieg ermöglichen. Das Trittbrett 26 kann alternativ oder zusätzlich an einem oder mehreren Befestigungspunkten 20, 22, 23 beispielsweise lösbar an der Basis 01, insbesondere am Tragrahmen 02 angeordnet oder anordbar sein. Hiernach ist das Trittbrett 26 ähnlich einem Wechselaufbau 05 bedarfsweise installierbar, beispielsweise wenn der Wechselaufbau 05 einen Knieschluss erlaubt, oder wenn eine Durchladeöffnung 63 unter der Sitzfläche 60 das Ablegen besonders sperriger Transportgegenstände auf einem Trittbrett 26 erlaubt.

Der Wechselaufbau 05, 51, 52, 53 kann einen Knieschluss erlauben. Mit anderen Worten weist der Motorroller 99 zumindest in unbeladenem Zustand einen freien Durchstieg zwischen dem den Lenkerbügel 10 tragenden Lenker und der Sitzfläche 60 beziehungsweise der Sitzmöglichkeit 06 oder dem Sattel auf. Der einen Knieschluss erlaubende Wechselaufbau 05 des Motorrollers 99 ist zumindest in unbeladenem Zustand im Kniebereich frei von festen Fahrzeugteilen.

Alternativ kann der Wechselaufbau 05, 54, 55, 56, 57 einen Knieschluss unterbinden. Bei einem Knieschluss sitzt der Fahrer mit einem Bein links und einem Bein rechts an einem festen Fahrzeugteil anliegend auf einer als Sattel ausgebildeten Sitzgelegenheit, ähnlich der Sitzposition auf einem Pferd. Statt in Steigbügeln können die Füße beim Fahren auf Fußrasten abgestützt werden. Ein breites Trittbrett 26 kann beim Motorroller 99 alternativ oder zusätzlich die Funktion von Fußrasten übernehmen. Der Motorroller 99 weist zumindest in unbeladenem Zustand einen freien Durchstieg verhindernde Wechselaufbauteile zwischen dem den Lenkerbügel 10 tragenden Lenker und der Sitzfläche 60 beziehungsweise einer die Sitzfläche 60 umfassenden Sitzmöglichkeit 06, wie etwa einem als Sitzmöglichkeit 06 vorgesehenen Sattel auf. Der einen Knieschluss unterbindende Wechselaufbau 05 weist zumindest in unbeladenem Zustand vom Wechselaufbau 05 herrührende, feste Fahrzeugteile im Kniebereich auf, genauer: feste Wechselaufbauteile.

Vorteilhaft weist der Wechselaufbau 05, 52, 54, 55, 56, 57 zumindest unter der Sitzfläche 60 ein Staufach 62 auf.

Bevorzugt ist das Staufach 62 zu beiden Fahrzeugseiten geschlossen.

Das Staufach 62 kann abschließbar sein.

Alternativ oder zusätzlich zu den voranstehenden Ausführungen kann der Wechselaufbau 05, 53 eine unter der Sitzfläche 60 in Richtung der Längserstreckung des Tragrahmens 02 hindurchführende Durchladeöffnung 63 aufweisen.

Damit mehr als nur eine Person auf dem Motorroller 99 fahren kann, kann der Wechselaufbau 05, 54 eine mindestens Tandemsitzfläche 61 aufweisen. Die Tandemsitzfläche 61 zeichnet sich dadurch aus, dass zwei Personen hintereinander darauf Platz finden. Eine mindestens Tandemsitzfläche sieht in diesem Zusammenhang vor, dass wenn eine Tandemsitzfläche 61 entsprechend länger ausgebildet ist, auf ihr so auch drei, vier oder auch mehr Personen hintereinander Platz nehmen können (Tripel-, Quadroupel-, etc. sitzfläche).

Der Wechselaufbau 05 kann einen hinter der Sitzfläche 60 angeordneten Gepäckträger 64 aufweisen.

Alternativ oder zusätzlich kann der Wechselaufbau einen vor der Sitzfläche 60 angeordneten Gepäckträger 64 aufweisen.

Der Vollständigkeit halber sei erwähnt, dass an der Basis 01, beispielsweise vor dem Lenkerbügel 10 und/oder oberhalb des Vorderrads 03 und/oder hinter und/oder oberhalb des Hinterrads 04 alternativ oder zusätzlich ein Gepäckträger angeordnet und/oder anordbar sein kann.

Der Wechselaufbau 05, 57 kann ein die Höhe der Sitzfläche 60, 61 vor dieser überragendes Staufach 62 aufweisen. Alternativ oder zusätzlich kann der Wechselaufbau 05 ein die Höhe der Sitzfläche 60 hinter dieser überragendes Staufach aufweisen.

Wichtig ist hervorzuheben, dass der Motorroller 99 besonders bevorzugt über einen Elektroantrieb verfügt.

Motorroller gibt es seit 1916. Die Ur-Vespa von 1964 hat den Typus Roller bis heute geprägt. Der Roller wird eher als Notfahrzeug für Jugendliche betrachtet, solange sie kein Auto haben. Der Roller gilt daher eher als ein Spaß-Fahrzeug.

Durch die Elektromotorisierung, insbesondere durch den Nabenmotor, sind nun ganz neue Rollerkonzepte möglich. Es gibt keinen Verbrennungsmotor, keinen Tank, kein Getriebe. Alles Komponenten, die viel Platz brauchten, der nun einer neuen Verwendung zugeführt werden kann, wie dies beispielsweise beim eingangs erwähnten "Fat Albert" der Fall ist.

Es ist ersichtlich, dass die Erfindung verwirklicht sein kann durch einen Motorroller 99, der immer auf dem selben Basis-Motorroller aufbaut. Grundlage des Motorrollers 99 ist eine kurz als Basis 01 bezeichnete Roller-Plattform, der auf das funktionale Minimum reduziert ist, wie fahren, lenken, bremsen, laden, um möglichst viele unterschiedliche Wechselaufbauten 05 darauf zu ermöglichen.

Die Basis 01 verfügt vorteilhaft über eine gesetzliche Abnahme, wie beispielsweise über eine Straßenverkehrszulassung. Dies ermöglicht dem Einzelnen, seinen auf dessen individuelles Transportbedürfnis angepassten Roller anzufertigen oder anfertigen zu lassen.

Wichtig dabei sind kurz als Befestigungspunkte bezeichnete, intelligente Kontenpunkte, die es ermöglichen, ohne Bohren oder Schweißen, Neues auf der Basis 01 darauf zu errichten. Bohren und schweißen würde ein neue Gesamtgutachten erfordern, weshalb möglichst intelligente Schnittstellen benötigt werden. Das soll durch die Intelligenz der Verbindungspunkte gelöst werden.

Die Erfindung umfasst sowohl den Basis-Roller, den Basisrahmen, die Verbindungselemente oder die variablen Wechselaufbauten im einzelnen, als auch in Kombination.

Es ist ersichtlich, dass die Erfindung eine ideale Basis 01, mit entsprechenden, als Befestigungspunkte 20, 21, 22, 23, 24, 25 bezeichneten Schnittstellen, für möglichst variable Wechselaufbauten 05, 51, 52, 53, 54, 55, 56, 57 eines als E-Lasten- oder Funktions-Scooter ausgebildeten Motorrollers 99 bereitstellt, ohne dafür bei jedem ein Gesamtgutachten zu benötigen.

Der so gestaltete "Roller der Zukunft" wir auf Grund seiner Funktionalität einen viel höheren Stellenwert im Verkehr bekommen, ganz besonders im urbanen Bereich. Es können durch Auswahl entsprechender, auf der Basis 01 angeordneter Wechselaufbauten 05 mitunter ganz individuell aufgebaute Nutzfahrzeuge verwirklicht werden, die durch ihre Leichtigkeit und Funktionalität herausragen.

Diese durch die Wechselaufbauten 05 gebildeten unterschiedlichen Rolleraufbauten verfügen über mit den Befestigungspunkten 20 an der Basis 01 korrespondierende Befestigungselemente. Durch die Befestigungspunkte 20 an der Basis 01 und die hiermit korrespondierenden Befestigungselemente am Wechselaufbau werden bei dem erfindungsgemäßen Motorroller 99 intelligente Verbindungsstrukturen verwirklicht, die eine leichte Errichtung unterschiedlicher Wechselaufbauten 05 ermöglichen, ohne dabei am Rahmen schweißen, sägen oder Bohren zu müssen.

Damit einhergehende Vorteile sind, dass die Basis 01 eine Zulassung hat und durch Wahl eines eine spezielle Transportlösung ermöglichenden Wechselaufbaus 05 an verschiedenartigste Transportbedürfnisse angepasste Motorroller 99 mit geringem Aufwand verwirklicht werden können.

Im Ergebnis ist es dadurch möglich, nachträgliche Umbauten beziehungsweise Anpassungen an verschiedenartigste Transportbedürfnisse durch Herstellung und Auswahl hierauf angepasster Wechselaufbauten 05 zu verwirklichen.

Ein als Lasten-Roller ausgebildeter Motorroller 99 kann eine Zuladung von über 200 kg aufweisen. Der Roller braucht dabei im Vergleich zu einem Kleinwagen nur 20% der Fläche beim Parken, braucht 95 % weniger Masse und daher auch 95% weniger Energie. Er braucht 95% weniger Ressourcen und bietet viel mehr Fahrspaß. Die Parkplatzsuche wird vereinfacht oder entfällt gänzlich. Ebenso verhält es sich mit den Parkgebühren. Stadtbesucher per Roller halten sich länger in der Stadt auf und besuchen auch unterschiedliche Orte in der Stadt (City-Hopping) D.h., die Rollermobilität aktiviert den Stadtbesucher was auch die Städte belebt.

Der E-Lasten-Roller kann durch gezielte Wechselaufbauten 05 in Unterschiedlichsten Bereichen das Auto ersetzen. Dadurch sparen die Leute Geld, der Verkehr wird entlastet, Parkplätze werden entlastet, die Stadt wird belebt.

Je intelligenter, d.h. leicht an unterschiedliche Transportbedürfnisse anpassbar und flexibler die Plattform ist, um so leichter kann darauf aufgebaut werden und umso erschwinglicher werden Sonderanfertigungen.

Wichtig ist hervorzuheben, dass die kurz als Befestigungspunkte bezeichneten Befestigungsbereiche mit beispielsweise an dem Wechselaufbau 05 und/oder der Sitzmöglichkeit 06 angeordnetem oder von dieser umfassten Befestigungs- und/oder Verbindungsmitteln korrespondierende Verbindungselemente umfassen können. Die Befestigungs- und/oder Verbindungsmittel gehen mit den korrespondierenden Verbindungselementen eine bedarfsweise lösbare, beispielsweise form- und/oder reib- und/oder kraftschlüssige mechanische Verbindung ein. Diese beispielsweise lösbare Verbindung kann Bajonettverschlüsse und/oder Rastverschlüsse oder dergleichen umfassen. Alternativ oder zusätzlich kann es sich bei den Verbindungselementen der Befestigungspunkte bzw. -bereiche um beispielsweise Rahmenabschnitte des Tragrahmens 02 handeln, an denen beispielsweise als Rohrschellen und/oder Klemmverschlüsse und/oder beispielsweise werkzeugfrei betätigbare Schnellverschlüsse ausgebildete Befestigungs- und/oder Verbindungsmittel festleg- und/oder anordbar sind. Denkbar sind auch Aufnahmen in Form von beispielsweise Bohrungen, wie etwa Durchgangs- und/oder Sacklöcher, beispielsweise in Form von Lochreihen angeordnet für entsprechende, hiermit korrespondierende Befestigungs- und/oder Verbindungsmittel.

Ebenfalls wichtig ist hervorzuheben, dass die Befestigungspunkte auch dafür vorgesehen werden können, zwei Motorroller parallel miteinander zu verbinden. Hierdurch kann anhand der Befestigungspunkte in Addition auch ein mehrspuriges Fahrzeug daraus werden. Eine Kabelgebundene Steuerung beispielsweise erlaubt per so genanntem "drive-by-wire" die Lenkung des so neu entstandenen Fahrzeugs von nur einem Lenker aus. Alternativ oder zusätzlich ist eine Verbindung der beiden Lenker per Koppelstange denkbar, um einen Lenkausschlag an beiden miteinander gekoppelten Motorrollern sicherzustellen.

In Zusammenhang mit einem beispielsweise zu beiden Fahrzeugseiten hin geschlossen Staufach 62 ist wichtig zu erwähnen, dass der Roller oder zumindest dessen Staufach 62 nach oben hin auch offen sein kann, in Analogie zu Lastenbikes. Denkbar ist beispielsweise eine Verwendung zum Transport von Haustieren, insbesondere Hunden. Dabei kann eine Seitenwand oder ein Teil einer solchen als eine Seitenklappe um eine horizontal parallel zur Fahrzeuglängsachse verlaufende Schwenkachse herunterklappbar ausgestaltet sein, um beispielsweise als Rampe zu dienen.

Die Fahrzeugplattform, beziehungsweise der Tragrahmen 02 kann als ein Systemträger ausgeführt sein, auf dem beispielsweise analog zu Containern oder Kühlcontainern beispielsweise als Kühlboxen oder Frachtboxen ausgeführte Wechselaufbauten 05 anordbar sein können. Diese können mit einem eigenen elektrischen Energiespeicher - vulgo Akku - für Kühlung oder Heizung ausgestattet sein, die bedarfsweise ausgetauscht werden können. Als Anwendung ist denkbar, beispielsweise Kunden mit Lebensmitteln in austauschbaren Systemboxen zu beliefern. Diese können beispielsweise in einer speziellen Box am Haus abgelegt werden, in der sie auch gleich wieder mit Strom versorgt werden um eine permanente Kühlung zu gewährleisten. Das kann auch anderswo Sinn machen, wie z.B. im medizinischen Bereich, Medikamentenbereich.

Die beispielsweise Transport- und/oder Frachtboxen umfassenden und/oder als solche ausgeführten Wechselaufbauten 05 können Funktionalitäten beinhalten, wie beispielsweise Kühlung, Heizung, Akku, Monitoring, Vernetzung, Intelligenz.

Beispielsweise kann ein Wechselaufbau 05 zur Verkehrsüberwachung vorgesehen sein, der beispielsweise eine von einer Geschwindigkeitsmessvorrichtung ausgelöste Kamera umfasst. Ein Motorroller 99 mit einer mit einem solchen Wechselaufbau 05 ausgestatteten Basis 01 kann beispielsweise als mobiles Radargerät eingesetzt werden.

Auch sind Ausgestaltungen beispielsweise für Handwerker und Gewerbetreibende denkbar, umfassend als Aggregate-Träger wie Kompressor, Pumpe, Ladegerät, Großer Akku, eventuell in Kombination mit Schweißgerät, Schlagbohrmaschine, etc. ausgestaltete oder solche umfassende Wechselaufbauten 05. Auch sind Wechselaufbauten mit mobiler Video- und/oder Tontechnik beispielsweise als fahrender Lautsprecher für öffentliche Auftritte, Konzerte, Ansprachen denkbar.

Der Motorroller 99 kann beispielsweise in seinen Tragrahmen 02 oder in einen Wechselaufbau 05 integriert ein Kreiselsystem für ein selbstfahrendes einspuriges Fahrzeug umfassen.

Wechselaufbauten 05 können alternativ oder zusätzlich Wasserstofftanks und Brennstoffzellen zur beispielsweise dezentralen, netzunabhängigen Elektrizitätsversorgung umfassen.

Wechselaufbauten 05 können auch als mobiler Werkzeugkasten ausgebildet sein. Eine Ausgestaltung ist auch als beispielsweise aufblasbares Campingzelt denkbar, als mobile Küche, Foot Scooter, mit Gas und Grill oder Behälter mit Würstchen, Getränkebox, etc.

Auch kann der Motorroller 99 als Rettungsfahrzeug mit Erst-Helfer Paket, Defibrillator, Sauerstoff, Infusionen umfassendem Wechselaufbau 05 ausgeführt sein für beispielsweise Events, Konzerte, Sportveranstaltungen, Krisengebiete, bei denen die Wendigkeit des Rollers von Vorteil ist.

Das Ganze ist natürlich auch als Allradausführung denkbar.

Wichtig ist hervorzuheben, dass die Erfindung ein einen transportbedarfsgerecht anpassbaren Motorroller 99 bereitstellendes System verwirklicht, welches System aus verschiedenen, jeweils an eine besondere Transportaufgabe angepassten oder anpassbaren Wechselaufbauten 05 mit jeweils der auf oder an dem jeweiligen Wechselaufbau 05 ausgebildeter Sitzmöglichkeit, beispielsweise Sitzfläche 60, 61, und der Basis 01 mit dem Lenkerbügel 10 und dem Tragrahmen 02 mit Vorder- 03 und Hinterrad 04 besteht, wobei an dem Tragrahmen 02 mindestens zwei Befestigungspunkte 20, 21, 22, 23, 24, 25 zur beispielsweise lösbaren Anordnung eines der Wechselaufbauten 05 an mindestens einem der Befestigungspunkte 20, 21, 22, 23, 24, 25 des Tragrahmens 02 ausgebildet sind.

Eine Besonderheit des durch ein solches System bereitgestellten Motorrollers 99 ist, dass innerhalb der durch einen Motorroller oder allgemein ein einspuriges, zweirädriges Fahrzeug vorgegebenen Grenzen eine optimale Schwerpunktlage einhergehend mit einer verbesserten Fahrstabilität und/oder Fahrdynamik sowie hieraus resultierender erhöhter Verkehrssicherheit unabhängig von einer momentan zu erbringenden Transportaufgabe sichergestellt ist. Dies wird erreicht, indem jeder an eine eigene Transportaufgabe angepasste Wechselaufbau 05 eine Sitzfläche 60, 61 aufweist, die den Fahrer des durch Kombination der Basis 01 mit dem Wechselaufbau 05 erhaltenen Motorrollers 99 innerhalb einer durch die am Wechselaufbau 05 angeordnete Sitzfläche 60, 61 vorgegebenen Position platziert. Da der an eine besondere Transportaufgabe angepasste Wechselaufbau 05 wiederum denjenigen Bereich des Motorrollers 99 vorgibt, innerhalb dem eine bestimmte Last transportiert wird oder werden kann, lässt sich durch die besondere Kombination von transportbedarfsgerecht ausgebildetem Wechselaufbau und an diesem entsprechend transportbedarfs- und gewichtverteilungsoptimal angeordneter Sitzfläche eine innerhalb der durch ein einspuriges, zweirädriges Fahrzeug vorgegebenen Grenzen optimal eingestellte Schwerpunktlage einstellen. Ein besonders erwähnenswerter Vorteil ist, dass eine allgemeine Straßenzulassung der Basis 01 genügt, um mit allgemeinen Betriebserlaubnissen für die verschiedenen, transportbedarfsgerecht ausgestalteten Wechselaufbauten 05 jegliche Zulassungshürden für jeden durch das System bereitstellbaren Motorroller 99 zu umgehen. Dies erlaubt einem Inverkehrbringer, wie einem Hersteller oder Händler oder gar einem Endverbraucher selbst, verschiedene Wechselaufbauten 05 je nach Transportbedarf auf der Basis 01 anzuordnen und den so durch das System bereitgestellten Motorroller 99 im Straßenverkehr zu nutzen.

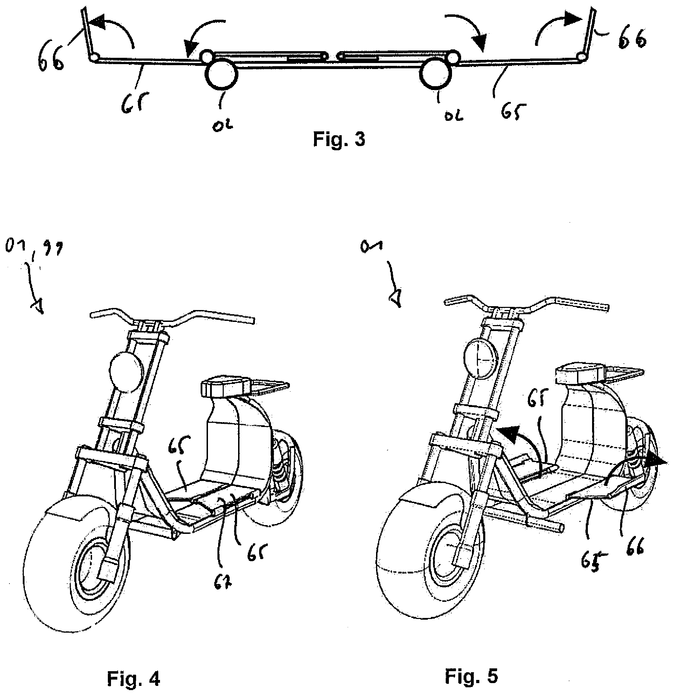

In den Fig. 3 bis 5 sind die Klappflügel 65 zur Verbreiterung der Auflagefläche ausgeklappt und eingeklappt auf der Trittfläche ersichtlich.

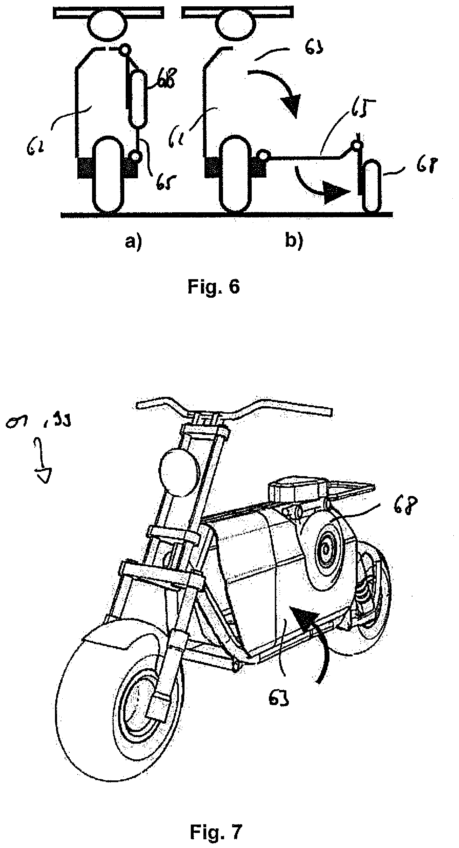

Fig.6 zeigt eine Ansicht a) und b) der Klappflügel 65 geschlossen und ausgeklappt mit aktiviertem Seitenrad 68.

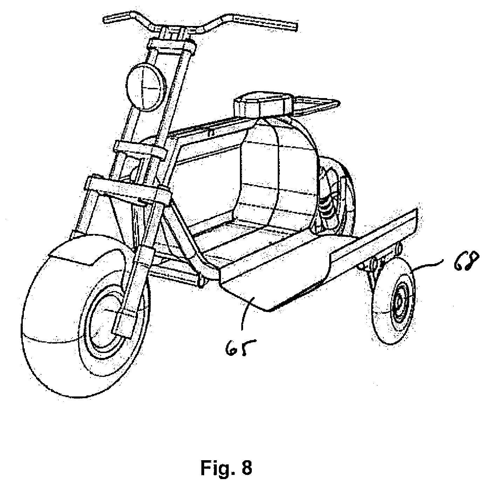

In Fig. 7 ist eine Ansicht des Motorrollers mit Klappflügel 65 geschlossen mit deaktiviertem Seitenrad 68 nochmals gezeigt. Entsprechend ist in Fig. 8 eine Ansicht des Motorroller mit Klappflügel ausgeklappt mit aktiviertem Seitenrad 68 auf dem Boden gezeigt.

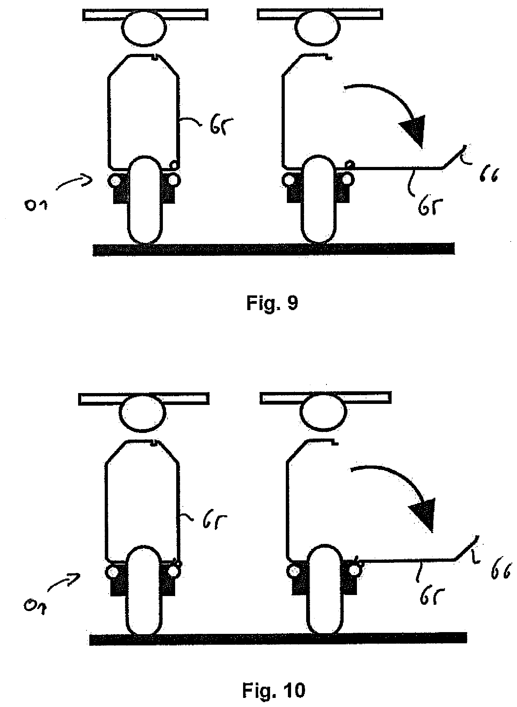

Die Varianten der Anlenkung des Klappflügels sind in den Fig. 9 und 19 gezeigt. Fig. 9: Motorroller mit Klappflügel ausgeklappt und geschlossen in Variante am Wechselaufbau.Fig. 10: Ansicht Motorroller mit Klappflügel ausgeklappt und geschlossen in Variante am Wechselaufbau.

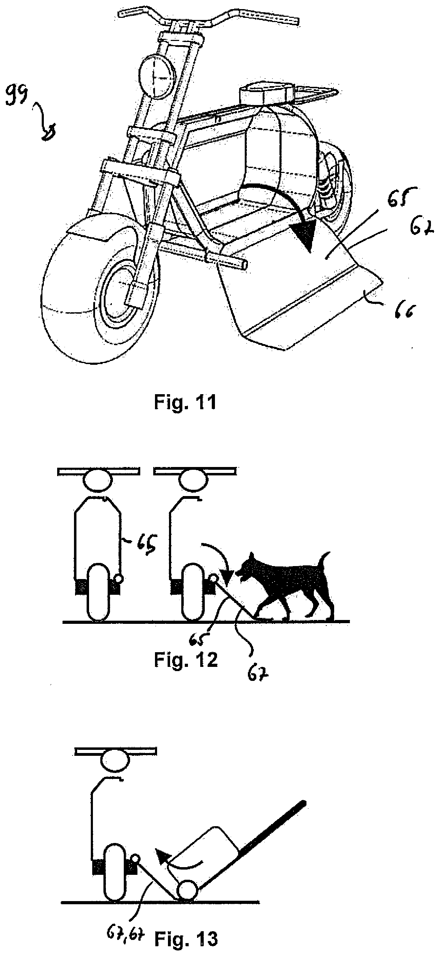

Fig. 11 zeigt eine Ansicht des Motorrollers mit Klappflügel 65 als Rampe 67.

Fig. 12 zeigt den Motorroller mit Klappflügel als Rampe geöffnet und geschlossen als Tiertransportbox für Teire, und

Fig. 13 zeigt den Motorroller mit Klappflügel als Rampe zur erleichterten Gepäckeinladung.

Die Erfindung ist nicht durch die Beschreibung anhand der Ausführungsbeispiele beschränkt. Vielmehr umfasst die Erfindung jedes neue Merkmal sowie jede Kombination von Merkmalen, was insbesondere jede Kombination von Merkmalen in den Ansprüchen beinhaltet, auch wenn dieses Merkmal oder diese Kombination selbst nicht explizit in den Ansprüchen oder Ausführungsbeispielen angegeben ist.

Die Erfindung ist insbesondere im Bereich der Herstellung von Fahrzeugen, insbesondere Kraftfahrzeugen gewerblich anwendbar.

Die Erfindung wurde unter Bezugnahme auf bevorzugte Ausführungsformen beschrieben. Es ist jedoch für einen Fachmann vorstellbar, dass Abwandlungen oder Änderungen der Erfindung gemacht werden können, ohne dabei den Schutzbereich der nachstehenden Ansprüche zu verlassen.

### Bezugszeichenliste

- 01: Basis
- 02: Tragrahmen
- 03: Vorderrad
- 04: Hinterrad
- 05: Wechselaufbau

- 10: Lenkerbügel

- 20 bis 25: Befestigungspunkt
- 26: Trittbrett

- 51: Wechselaufbau (mit Knieschluss)
- 52: Wechselaufbau (mit Knieschluss, mit Staufach 62)
- 53: Wechselaufbau (mit Knieschluss, mit Durchladeöffnung 63)
- 54: Wechselaufbau (ohne Knieschluss, mit Staufach 62, mit Tandemsitzfläche 61)
- 55: Wechselaufbau (ohne Knieschluss
- 56: Wechselaufbau (ohne Knieschluss
- 57: Wechselaufbau (ohne Knieschluss, mit Sitzfläche überragendem Staufach 62)

- 60: Sitzfläche
- 61: Tandemsitzfläche
- 62: Staufach
- 63: Durchladeöffnung
- 64: Gepäckträger
- 65: Klappflügel
- 66: Auslegefläche
- 67: Rampe
- 68: Seitenrad
- 99: Motorroller

## Patentansprüche

1. Motorroller (99) mit einer Basis (01) mit einem Lenkerbügel (10) und einem Tragrahmen (02) mit Vorder- (03) und Hinterrad (04), umfassend:
- mindestens eine Sitzfläche (60, 61), und mit
- mindestens einer/m zur lösbaren Anordnung eines Wechselaufbaus (05) an dem Tragrahmen (02) und/oder auf einer durch den Tragrahmen gebildeten Unterstützungsfläche und/oder hierzu ausgebildete/n Befestigungspunkt/en (20, 21, 22, 23, 24, 25) zur Festlegung des Wechselaufbaus,
**dadurch gekennzeichnet, dass**
der Wechselaufbau (05, 53) und/oder der Tragrahmen eine ein oder beidseitig des Motorrollers ausgebildete, wenigstens zum Teil unter der Sitzfläche (60) hindurchführende Lade- oder Durchladeöffnung (63) aufweist.

2. Motorroller nach Anspruch 1,
**dadurch gekennzeichnet, dass**
an der Lade- oder Durchladeöffnung (63) wenigstens ein Klappflügel (65) angeordnet ist, der entweder an dem Wechselaufbau oder an dem Tragrahmen angelenkt ist, wobei der Klappflügel in aufgeklapptem Zustand eine Auflagefläche seitlich der Durchladeöffnung bildet, sodass die Unterstützungsfläche verbreiterbar ist, wobei der Klappflügel hierzu insbesondere in einer Position fixierbar ist.

3. Motorroller nach Anspruch 2,
**dadurch gekennzeichnet, dass**
die Lade- oder Durchladeöffnung (63) wenigstens an einer Seite des Motorrollers mit dem Klappflügel als Klappe im zugeklappten Zustand verschließbar ist.

4. Motorroller nach Anspruch 2 oder 3,
wobei die wenigstens eine Klappe insbesondere eine weitere an dieser angelenkte von dieser abklappbare Auslegefläche (66) aufweist, die die Unterstützungsfläche im ausgeklappten Zustand nochmals vergrößert oder einen Anschlag bildet.

5. Motorroller nach einem der vorhergehenden Ansprüche,
wobei die wenigstens eine Klappe in geöffnetem Zustand eine Rampe von der Unterstützungsfläche zum Boden unter bzw. neben dem Motorroller bildet, vermittels welcher Gegenstände vom Boden neben dem Motorroller in den Wechselaufbau (05) und/oder auf die Unterstützungsfläche erleichtert gebracht werden können.

6. Motorroller nach Anspruch 1, wobei der Wechselaufbau (05, 51, 52, 53, 54, 55, 56, 57) zumindest unter Beitrag eines Formschlusses an wenigstens einem der Befestigungspunkte (20, 21, 22, 23, 24, 25) lösbar anordenbar ist.

7. Motorroller nach einem der vorhergehenden Ansprüche, wobei der Schwerpunkt der Unterstützungsfläche im Wesentlichen auf Höhe der Achsen der Räder angeordnet ist.

8. Motorroller nach einem der vorhergehenden Ansprüche, wobei die Sitzfläche (60, 61) an dem Wechselaufbau (05) ausgebildet ist.

9. Motorroller nach Anspruch 2, wobei an der Klappe ein im geöffneten Zustand der Klappe auf dem Boden neben dem Motorroller abrollendes, die Unterstützungsfläche wenigstens teilweise unterstützendes Seitenrad (68) angebracht ist.

10. Motorroller nach Anspruch 1, 2 oder 3, wobei der Tragrahmen (02) ein zwischen Vorder- (03) und Hinterrad (04) angeordnetes Trittbrett (26) umfasst.

11. Motorroller nach einem der voranstehenden Ansprüche, wobei der Wechselaufbau (05, 52, 54, 55, 56, 57) zumindest unter der Sitzfläche (60, 61) einen Stauraum oder ein Staufach (62) aufweist.

12. Motorroller nach einem der voranstehenden Ansprüche, wobei der Wechselaufbau (05, 57) ein die Höhe der Sitzfläche (60, 61) vor dieser überragenden Stauraum oder Staufach (62) aufweist.

13. Motorroller nach einem der voranstehenden Ansprüche, wobei der Wechselaufbau (05) ein die Höhe der Sitzfläche (60, 61) hinter dieser überragenden Stauraum oder Staufach (62) aufweist.

14. System zur Bereitstellung eines transportbedarfsgerecht angepassten Motorrollers (99) nach einem der voranstehenden Ansprüche, bestehend aus einer Gruppe von unterschiedlichen, jeweils an eine individuelle Transportaufgabe angepassten oder anpassbaren Wechselaufbauten (05) mit jeweils der auf oder an dem jeweiligen Wechselaufbau (05) ausgebildeter Sitzmöglichkeit (60, 61), und der Basis (01) mit dem Lenkerbügel (10) und dem Tragrahmen (02) mit Vorder- (03) und Hinterrad (04), wobei an dem Tragrahmen (02) mindestens zwei Befestigungspunkte (20, 21, 22, 23, 24, 25) zur Anordnung eines der Wechselaufbauten (05) an mindestens einem der Befestigungspunkte (20, 21, 22, 23, 24, 25) des Tragrahmens (02) ausgebildet sind.
